# EUROPÄISCHE PATENTSCHRIFT

(11) **EP 0 883 989 B1**
(45) Veröffentlichungstag und Bekanntmachung des Hinweises auf die Patenterteilung: **07.08.2002**
(21) Anmeldenummer: 98109822.1
(22) Anmeldetag: 29.05.1998
(51) Int. Cl.: A01M 21/04, F23D 14/16

(54) **Vorrichtung zum Vernichten von Unkraut, Wildwuchs, Ungeziefer und Bakterienstämmen**
Device for eradication of weeds, wild plants, pests and bacterial strains
Dispositif pour tuer les mauvaises herbes, plantes sauvages, vermines et souches bactériennes

(30) Priorität: 10.06.1997 CH 139897
(43) Veröffentlichungstag der Anmeldung: 16.12.1998
(73) Patentinhaber: Messerli, Rudolf, 6997 Sessa (CH)
(72) Erfinder: Messerli, Rudolf, 6997 Sessa (CH)
(74) Vertreter: Blum, Rudolf Emil Ernst

(56) Entgegenhaltungen:
- EP-A- 0 410 569
- EP-A- 0 518 038
- GB-A- 907 061

## Beschreibung

Die Erfindung betrifft eine Vorrichtung zum Vernichten von Unkraut, Wildwuchs, Ungeziefer und Bakterienstämmen, mit einem Gehäuse, in welchem eine Gas/Luft-Mischkammer angeordnet ist, an welcher ein langgestreckter hohlzylinderförmiger Gas- und Lufteintrittskörper anschliesst, in welchem Gehäuse weiter eine poröse Keramikplatte zur Erzeugung von Infrarotstrahlen durch eine in den Poren erfolgende Verbrennung angeordnet ist, wobei die poröse Keramikplatte bei ihrer von der Gas/Luftmischkammer abgekehrten Hauptfläche von einem Schutznetz überdeckt ist, welches dazu dient, die Keramikplatte vor Beschädigungen und einem Verschmutzen zu schützen.

Es ist bekannt, Unkraut und Wildwuchs, beispielsweise Gewächse, die zwischen den Platten eines Gehweges hervorspriessen oder solche bei Randsteinen von Strassen, mittels einer Vorrichtung zu vernichten, in welcher Infrarotstrahlen erzeugt werden. Durch die aufgrund der Infrarotstrahlen entstehende Hitze werden die Pflanzenzellen zum Platzen gebracht, womit die Vernichtung des jeweiligen Unkrauts bzw. Wildwuchs eingeleitet wird. Dabei werden auch reife Samenzellen vernichtet, so dass ein weiteres Keimen verhindert ist. Bei mehrmaliger zeitlich auseinanderliegender Behandlung werden auch die Wurzeln der jeweiligen Pflanzen vernichtet. Auch lässt sich mit einer solchen Vorrichtung offensichtlich Ungeziefer vernichten, insbesondere in geschlossenen Räumen, beispielsweise Stallungen. Auch können Bakterienstämme vernichtet werden, beispielsweise auf Tennisplätzen oder Flächen, die barfuss betreten werden, z.B. bei Schwimmbädern.

Zum Betrieb der Vorrichtung wird ein gasförmiger Brennstoff, üblicherweise Propan, Butan oder ein Gemisch derselben einer Mischkammer zugeführt, welcher Brennstoff sich mit Luft vermischt. Nach erfolgter Zündung des Gas-/ Luftgemisches durch einen Funken entsteht in den Poren der Keramikplatte die Verbrennung des Gases, so dass Wärme in Form von Infrarotstrahlen nach unten abgestrahlt wird.

Eine solche Vorrichtung eingangs genannter Art ist bereits durch die EP-0518038 A1 bekannt. Diese Vorrichtung hat sich bewährt, und es wird bezweckt, eine solche Vorrichtung zu verbessern.

Die bekannte Vorrichtung ist mit einem der Keramikplatte vorgeschalteten Schutznetz versehen. Dieses ist notwendig, um die Keramikplatte vor Beschädigungen und vor einem Verschmutzen zu schützen. Bei Gebrauch der Vorrichtung grenzt das Schutznetz an das zu vernichtende Unkraut an, so dass das Schutznetz von diesem Unkraut abgekühlt wird. Das bedeutet, dass das Schutznetz nicht so stark von der Keramikplatte her aufgeheizt werden kann, dass das Schutznetz selbst eine nennenswerte Heizquelle darstellt, so dass also als wirksame Heizquelle nur die Keramikplatte selbst wirkt. Diese hat deshalb einen nennenswerten Abstand vom zu vernichtenden Unkraut. Dies ist nachteilig, denn die Wirksamkeit der Heizquelle sinkt mit zunehmendem Abstand zum Unkraut quadratisch ab.

Eine weitere Vorrichtung mit einem Gitter ist in der EP 0 410 569 offenbart. Jedoch weist auch diese Vorrichtung nur ein einziges Gitter zur Verstärkung der Heizquelle auf.

Es wird die Schaffung einer Vorrichtung bezweckt, mit der dieser Nachteil vermieden werden kann.

Die erfindungsgemässe Ausbildung der Vorrichtung ist dadurch gekennzeichnet, dass zwischen der Keramikplatte und dem Schutznetz zumindest ein Glühgitter angeordnet ist, auf das die Wärmeübertragung von der Keramikplatte her erfolgt.

Durch das Vorsehen dieses Glühgitters erfolgt nunmehr eine Wärmeübertragung von der Keramikplatte auf dieses Glühgitter, so dass dieses selbst als Heizquelle für das zu vernichtende Unkraut wirksam ist. Dies bedeutet nunmehr, dass die Heizquelle näher als bisher möglich an das Unkraut herangebracht wird, so dass die Wirksamkeit der Heizquelle wesentlich erhöht wird. Man könnte dieses zusätzliche Glühgitter in seiner Wirksamkeit mit einem sogenannten bekannten "Glühstrumpf" vergleichen, wie er bei Gasheizgeräten schon lange bekannt ist. Diese vorteilhafte Wirkung des "Glühstrumpfes" wird nunmehr für eine neue Verwendungsart benutzt.

Es ist vorteilhaft, wenn das Glühgitter im Abstand zur Keramikplatte liegt.

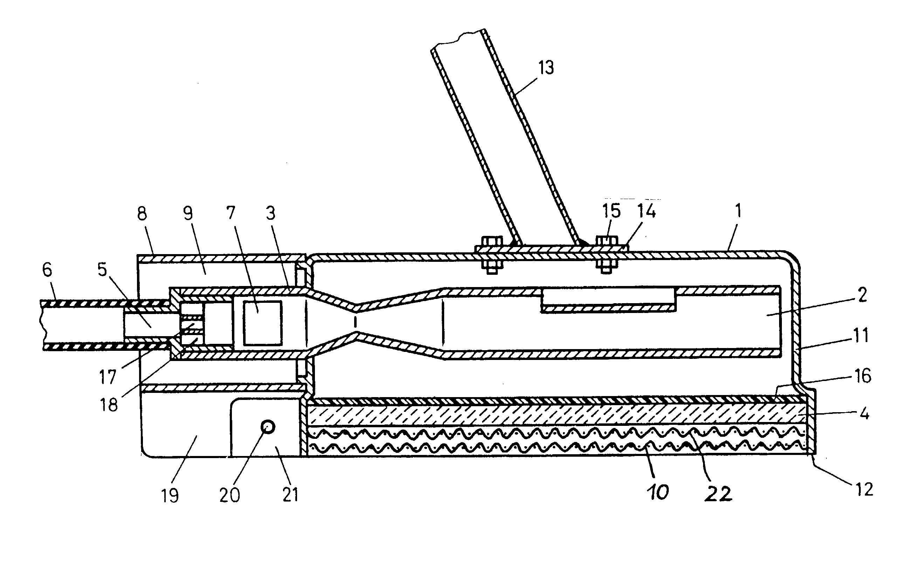

In der Zeichnung ist ein Ausführungsbeispiel des Erfindungsgegenstandes dargestellt, wobei die Zeichnung einen Längsschnitt des Teiles der Vorrichtung zeigt, der an einem nicht dargestellten Boden aufliegend längs bewegt wird, welcher Boden das zu vernichtende Unkraut usw. trägt.

Die Vorrichtung weist ein Gehäuse 1 auf, in welchem eine an sich bekannte Gas/Luft-Mischkammer 2 eingesetzt ist. Vom Deckel des Gehäuses 1 steht schrägwinklig ein Verlängerungsstutzen 13 ab, der zur Verbindung mit einem Handgriffrohr dient, derart, dass die Vorrichtung im Betrieb bewegt werden kann. Dieser Verlängerungsstutzen 13 ist bei der gezeigten Ausführung mit einer Platte 14 verschweisst, welche ihrerseits über Schraubbolzen 15 mit dem Gehäuse 1 verbunden ist.

Im Innenraum des Gehäuses 1 ist unterhalb der Gas/Luft-Mischkammer 2 die poröse Keramikplatte 4 angeordnet. Die Bezugsziffer 16 bezeichnet eine umlaufende Dichtung, mittels welcher die Keramikplatte gegen die Innenwand des Gehäuses 1 abgedichtet ist. Zuunterst ist ein Schutznetz 10 vorhanden, welches die Keramikplatte vor Beschädigungen und Verschmutzung schützt.

Aus der Figur ist ersichtlich, dass die Seitenwände 11 über die poröse Keramikplatte 4 und dem Schutznetz 10 heruntergezogen ausgebildet sind und bei einer Kante 12 enden, so dass die Vorrichtung über diese Kante 12 auf dem jeweiligen Grund, der bearbeitet wird, abgestützt werden kann. Durch diese Kante 12 ist auch der Abstand der porösen Keramikplatte 4 vom jeweils zu bearbeitenden Grund festgelegt. Diese über das Schutznetz 10 heruntergezogene Anordnung der Seitenwände 11 bildet folglich ein umlaufender Rahmen.

Beim in der Zeichnung linken Endbereich der Gas/Luft-Mischkammer 2 ist ein Gas- und Lufteintrittskörper 3 angeordnet.

Beim von der Mischkammer 2 entfernten Ende dieses Gas- und Lufteintrittskörpers 3 steht axial ein Rohrstutzen 5 ab. Dieser Rohrstutzen 5 dient zur Aufnahme des darüber zu schiebenden Gaszufuhrschlauches 6. Dieser Gaszufuhrschlauch 6 führt z.B. zu einer Propangasflasche, welche z.B. von der Bedienungsperson der Vorrichtung auf dem Rücken getragen wird. Das durch den Gaszufuhrschlauch 6 strömende Gas durchströmt also den Rohrstutzen 5 und durch eine Düse 17, die in einem Düsenträger 18 getragen ist, welcher im Gas- und Lufteintrittskörper 3 eingesetzt ist. Stromabwärts der Düse 17 weist der Gas- und Lufteintrittskörper 3 seitliche, seine Wand durchbrechende Lufteintrittsöffunungen 7 auf, wobei im gezeichneten Ausführungsbeispiel zwei einander diametral gegenüberliegende Lufteintrittsöffnungen vorhanden sind, von denen in der Zeichnung nur eine ersichtlich ist.

Der Gas- und Lufteintrittskörper 3 ist nun ein einer Windschutzhülse 8 eingesetzt, welche unten über einer Platte 19 und einer Verschraubung 20 mit einem Gegenstück 21 des Gehäuses 1 verbunden ist.

Die Windschutzhülse 8 umringt den Gas- und Lufteintrittskörper 3 und erstreckt sich in der gezeigten Ausführung bis über den Rohrstutzen 5. Die gezeichnete Länge der Windschutzhülse 8 ist nur beispielsweise, sie kann noch länger sein, d.h. bis zum Bereich des Gaszufuhrschlauches 6 verlaufen, der nicht mehr über den Rohrstutzen 5 aufgeschoben ist.

Zwischen der Innenwand der Windschutzhülse 8 und der Aussenwand des Gas- und Lufteintrittskörpers 3 ergibt sich folglich ein Luftzuströmraum 9 mit einer kreisringförmigen Querschnittsform. Die Lufteintrittsöffnung 7 weist einen beträchtlichen Abstand vom freien Ende, d.h. dem Lufteintrittsende in den Luftzuströmraum 9 auf. Dieser Luftzuströmraum 9 bewirkt nun eine Beruhigung der eintrömenden Luft, d.h. durch Seitenwende hervorgerufene Turbulenzen beim Eintritt des Luftzuströmraumes 9 klingen derart bis zur Lufteintrittsöffnung 7 ab, dass dort ein gleichförmiges Strömen der Luft in den Innenraum des Gasund Lufteintrittskörpers 3 und somit ein einwandfreies Vermischen mit dem zugeführten Gas stattfinden kann. Anders ausgedrückt, kann der Luftströmraum 9 als Luftspeicher bezeichnet werden, so dass immer dieselbe Luftmenge durch die Lufteintrittsöffnung 7 eingesaugt wird, so dass das Gas/Luftgemisch in der Gas/Luft-Mischkammer immer dasselbe Gas/Luftverhältnis aufweist und damit keine Störungen der Verbrennungen in den Poren der porösen Keramikplatte 4 auftreten können.

Es ist erkannt worden, dass auch Störungen der Verbrennung in den Poren der porösen Keramikplatte 4 durch Vorgänge bei deren Austrittsseite, also bei der Abgasströmung hervorgerufen werden können. Es ist wohl bekannt, irgendwelche ähnliche mit Hitze arbeitenden Vorrichtungen mit Schutzschildern zu versehen, wobei in diesen Schutzschildern Austrittsschlitze für das ausströmende Abgas und auch den bei der Vernichtung der Pflanzen entstehenden Dampf abzuführen. Es ist jedoch erkannt worden, dass auch hier eine möglichst ungestörte Strömung vorhanden sein muss, d.h. dass der Austritt der Abgase aus dem Gehäuse 1 in die Umgebung um eine möglichst grosse Strecke von der Unterseite der porösen Keramikplatte 4 entfernt sein muss.

Erfindungsgemäss ist nunmehr zwischen der Keramikplatte 4 und dem Schutznetz 10 zumindest ein Glühgitter 22 angeordnet, auf das die Wärmeübertragung von der Keramikplatte 4 her erfolgt. Es ist vorteilhaft, wenn das Glühgitter 22 im Abstand zur Keramikplatte 4 liegt. Im Betrieb der Vorrichtung erfolgt eine solche Wärmeübertragung von der Keramikplatte 4 auf das Glühgitter 22, das letzteres zum hellrot Glühen gebracht wird, und dies bedeutet, dass nunmehr dieses Glühgitter zur das Unkraut vernichtenden Heizquelle geworden ist. Da dieses Glühgitter 22 um einige Millimeter näher bei der unteren Kante 12 der Vorrichtung liegt als die Keramikplatte 4 selbst, kann eine wesentlich grössere Wirksamkeit der Vorrichtung erzielt werden. Da das Glühgitter 22 dem Schutznetz 10 nachgeschaltet ist, kann das Glühgitter 22 nicht vom zu vernichtenden Unkraut berührt werden und kann dadurch nicht von diesem abgekühlt werden. Da weiterhin, wie bereits erwähnt, die Wirksamkeit der Heizquelle mit geringerem Abstand zum zu vernichtenden Unkraut quadratisch ansteigt, kann die Vorrichtung schneller über den zu behandelnden Boden bewegt werden, und das bringt zusätzlich den Vorteil, dass die vorerwähnten Abgase schneller als bisher vom behandelten Boden dadurch abgeführt werden, da die Vorrichtung schneller als bisher über den behandelten Boden gleitet. Es müssen also nicht mehr gesonderte Vorkehrungen getroffen werden, um diese Abgase schnell wegführen zu können.

Mit dem zusätzlichen Glühgitter 22 wird also die Wirksamkeit einer gegebenen Heizleistung der Heizquelle auf das zu vernichtende Unkraut erhöht, wodurch die Vorrichtung schneller über den zu behandelnden Boden geführt werden kann und gleichzeitig eine schnelle Wegführung der entstehenden Abgase erfolgt.

## Patentansprüche

1. Vorrichtung zum Vernichten von Unkraut, Wildwuchs, Ungeziefer und Bakterienstämmen, mit einem Gehäuse (1), in welchem eine Gas/Luft-Mischkammer (2) angeordnet ist, an welcher ein langgestreckter hohlzylinderförmiger Gas- und Lufteintrittskörper (3) anschliesst, in welchem Gehäuse (1) weiter eine poröse Keramikplatte (4) zur Erzeugung von Infrarotstrahlen durch eine in den Poren erfolgende Verbrennung angeordnet ist, wobei die poröse Keramikplatte (4) bei ihrer von der Gas/Luftmischkammer (2) abgekehrten Hauptfläche von einem Schutznetz (10) überdeckt ist, welches dazu dient, die Keramikplatte (4) vor Beschädigungen und einem Verschmutzen zu schützen, **dadurch gekennzeichnet, dass** zwischen der Keramikplatte (4) und dem Schutznetz (10) zumindest ein Glühgitter (22) angeordnet ist, auf das die Wärmeübertragung von der Keramikplatte (4) her erfolgt, welches Glühgitter (22) im Abstand zur Keramikplatte (4) liegt.

## Claims

1. Device for eradication of weeds, wild plants, pests and bacterial strains, with a housing (1) in which a gas/air-mixing chamber (2) is located which is followed by an elongate gas and air inlet body (3) in form of a hollow cylinder, in which housing (1), furthermore, a porous ceramics plate (4) for a production of infrared rays by a combustion in the pores is located, whereby the ceramics plate (4) is covered by a protecting net (10) at its main surface facing away from the gas/air-mixing chamber (2) intended for protecting the ceramics plate (4) against damage and a soiling, **characterized in that** at least one incandescent grid (22) is located between the ceramics plate (4) and the protecting net (10) onto which heat is transmitted from the ceramics plate (4), which incandescent grid (22) is located at a distance from the ceramics plate (4).

## Revendications

1. Dispositif pour la destruction de mauvaises herbes, de vermine et de souches bactériennes, avec un boîtier (1) dans lequel est disposé une chambre (2) de carburation air-gaz prolongée par un corps allongé (3) d'amenée d'air et de gaz en forme de cylindre creux, une plaque de céramique poreuse (4) étant agencée dans le boîtier (1) pour produire une radiation infrarouge par combustion dans ses pores, cette plaque de céramique poreuse (4) étant abritée sur sa face principale opposée à la chambre (2) par une grille de protection (10) servant à protéger la plaque de céramique (4) contre les détériorations et les salissures, **caractérisé en ce qu'**au moins une grille incandescente (22) est agencée entre la plaque de céramique (4) et la grille de protection (10), la chaleur étant transmise à la grille incandescente située à distance de la plaque de céramique (4) à partir de cette plaque.
